(19) Europäisches Patentamt
European Patent Office
Office européen des brevets

(11) **EP 4 551 440 B1**

(12) **EUROPEAN PATENT SPECIFICATION**

(45) Date of publication and mention
of the grant of the patent:
**20.05.2026 Bulletin 2026/21**

(21) Application number: **22740905.9**

(22) Date of filing: **08.07.2022**

(51) International Patent Classification (IPC):
*B60W 30/02* (2012.01)    *B60T 8/17* (2006.01)
*B60T 8/1755* (2006.01)    *B60T 8/24* (2006.01)
*B60W 30/045* (2012.01)    *B60W 50/00* (2006.01)
*B60W 50/12* (2012.01)    *B62D 6/00* (2006.01)

(52) Cooperative Patent Classification (CPC):
**B60W 30/02; B60T 8/1708; B60T 8/1755;
B60T 8/24; B60W 30/045; B60W 50/0097;
B60W 50/12;** B60T 2201/16; B60W 2300/12;
B60W 2520/10; B60W 2520/12; B60W 2520/14;
B60W 2520/16; B60W 2520/18; B60W 2540/10;
(Cont.)

(86) International application number:
**PCT/EP2022/069075**

(87) International publication number:
**WO 2024/008307 (11.01.2024 Gazette 2024/02)**

(54) **UNDERSTEER PROTECTION IN A VEHICLE**

UNTERSTEUERUNGSSCHUTZ BEI EINEM FAHRZEUG

PROTECTION CONTRE LE SOUS-VIRAGE POUR UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.05.2025 Bulletin 2025/20**

(73) Proprietor: **VOLVO TRUCK CORPORATION**
**405 08 Göteborg (SE)**

(72) Inventors:
• **ARIKERE, Adithya**
**412 75 Göteborg (SE)**

• **LAINE, Leo**
**438 94 Härryda (SE)**
• **GELSO, Esteban**
**421 51 Göteborg (SE)**

(74) Representative: **Kransell & Wennborg KB**
**P.O. Box 2096**
**403 12 Göteborg (SE)**

(56) References cited:
**EP-A1- 2 492 160        DE-A1- 102017 001 709
DE-T5- 112018 002 177    FR-A1- 3 100 200
GB-A- 2 515 105**

(52) Cooperative Patent Classification (CPC): (Cont.)
B60W 2540/12; B60W 2540/18; B60W 2720/106;
B62D 6/003

## Description

### TECHNICAL FIELD

The present disclosure relates to the field of vehicle motion control. In particular, it discloses methods and devices for assisting a driver in such manner as to prevent an understeer condition in a heavy commercial vehicle.

### BACKGROUND

A typical example of understeer is where a vehicle is cornering and the front tires of the vehicle begin to slip first. Because the front tires are slipping and the rear tires have grip, the vehicle will turn less than if all tires had grip. Since the amount of turning is less than it would be if all tires had traction, this condition can be described as under-steering. An understeer condition can result if high speed is combined with a large steering angle. Understeering can also occur if the tractive or braking force is allocated unevenly to the wheels of the vehicle.

Already in a mild understeer condition, the driver will have difficulty maintaining the vehicle on the intended path. Indeed, the understeer condition will be further amplified by the driver's instinctive reaction to return the vehicle onto the intended path by increasing the steering angle, which could lead to considerable hazards. Many contemporary vehicles are therefore equipped with safety arrangements for assisting the driver in counteracting the understeer condition by removing its causes, or for preventing its occurrence altogether.

A general-purpose vehicle control method and arrangement for predicting and limiting a driver-requested control input is disclosed in US2009088918A1. The driver-requested control input is limited based on a current vehicle state and a predicted future behavior generated from the current vehicle state. When the driver-requested control input satisfies a restrictive condition, which depends on current road conditions, the driver-requested input is permitted to control the vehicle. Conversely, when the restrictive condition is not satisfied, a new control output is generated by applying a correction rule. The correction rule ensures that the control input stays in a predetermined permissible range. The brake pedal signal is one of the monitored control inputs, to which the correction rule can potentially be applied.

US2010131142A1 discloses a system for predicting dynamics of a vehicle moving along a path or lane, namely, by reading current vehicle state parameters including yaw rate, vehicle speed and steering-wheel angle, and feeding said parameters to a vehicle dynamics model. By using an obtained target path (or ideal path) based on additional sensor data, such as camera or GPS, the future steering input is predicted and early intervention may be performed to ensure vehicle stability.

The solutions disclosed in US2009088918A1 and US2010131142A1 are not optimally suited for managing understeer in a heavy commercial vehicle.

The document FR 3 100 200 A1 shows a method for real-time control of motion actuators in a heavy commercial vehicle in accordance with motion requests, the method comprising:

> obtaining a stream of motion requests;
> predicting a motion request to be obtained after a period of predefined length into the future;
> determining whether the predicted motion request is within the vehicle's momentary force and moment capabilities;
> predicting a motion state of the vehicle after said period,
> determining whether the predicted motion state is within a motion-state threshold;
> if the predicted motion request is within said force and moment capabilities and the predicted motion state is within the motion-state threshold:

>> controlling the motion actuators without limitation during said period;
>> if the predicted motion request exceeds said force and moment capabilities and the predicted motion state exceeds the motion-state threshold:
>> controlling the motion actuators subject to a configured first limitation during said period.

### SUMMARY

One objective of the present disclosure is to make methods and devices available that are suitable for controlling motion actuators in a vehicle in such manner that motion requests are respected to the greatest practicable extent while avoiding understeer. A further objective is to avoid unneeded interventions, i.e., to respect the motion requests unless the need for understeer-avoiding interventions has been confirmed with high certainty. A further objective is to propose methods and devices for controlling the motion actuators that take less intrusive understeer-avoiding action as long as the need for interventions has not been confirmed with the desired high certainty. A still further objective is to propose a useful motion-based criterion for determining whether understeer-avoiding interventions are needed. A general objective is to make available such methods and devices suitable for controlling motion actuators in a heavy commercial vehicle.

At least some of these objectives are achieved by the invention as defined in the appended independent claims. The dependent claims relate to advantageous embodiments of the invention.

In a first aspect of the invention, there is provided a method for real-time control of motion actuators in a heavy commercial vehicle in accordance with motion requests. The method comprises: obtaining a stream of motion requests; predicting a motion request to be obtained after a period of predefined length T into the future; determining whether the predicted motion request is within the vehicle's momentary force and moment capabilities; predicting a motion state of the vehicle after said period; and determining whether the predicted motion state is within a motion-state threshold. If it is determined that the predicted motion request is within said force and moment capabilities and the predicted motion state is within the motion-state threshold, the motion actuators are controlled without limitation during said period. If instead the predicted motion request exceeds said force and moment capabilities *and* the predicted motion state exceeds the motion-state threshold, the motion actuators are controlled subject to a configured first limitation during said period. The motion request to be obtained after said period into the future is predicted based on an assumption of driver behavior or automated driving system, ADS, behavior and/or is predicted by inputting a history of one or more latest explicit motion requests to a filter.

A "stream of motion requests" in the sense of the claims may be a time-dependent representation of motion requests (or demands) from a driver interface or an automated driving system (ADS). The stream of motion requests can be represented as a discrete signal (or time series) or as a continuous signal. If the stream of motion requests is discrete, it may be associated with a convention that the latest received motion request shall remain valid for a predefined period and/or until it is superseded by a later motion request, so that a valid motion request can be inferred for each point in time during the operation of the vehicle.

In the terminology of the present disclosure, "force and moment capabilities" refers to a condition formulated in terms of forces or moments (or torques) on the vehicle, or both. The condition may be expressed as an inequality that the forces or moments shall fulfil. This may be understood as a force-based criterion. Further, a "motion-state threshold" refers to a condition formulated in terms of a motion state, such as a linear or angular motion of the vehicle, or both. The motion state may further be a time derivative, of any order, of the linear or angular motion. The condition may be expressed as an inequality that the motion state shall fulfil. This may be understood as a motion-based criterion. By formulating the force-based and motion-based criteria suitably (and adjusting these criteria in view of accumulated experience, as needed), an implementer will be able to accurately detect undesired dynamic behaviors of the vehicle, such as understeer, rollover and the like.

In the present disclosure, furthermore, the act of controlling the motion actuators subject to a "configured limitation" may include enforcing limits on a global force or global moment on the vehicle. Preferably, the "configured limitation" is not formulated in terms of individuals ones of the motion actuators in the vehicle; rather the limits on the global forces or moments are fulfilled when a vehicle motion management system determines control signals to the motion actuators (so-called control allocation) in accordance with the global forces or moments that result from applying the limitation. Preferably, the "configured limitation" respects the desired curvature expressed by the stream of motion requests, so that the vehicle will substantially follow the path intended by the driver or the ADS - albeit at different longitudinal speed or at a different value of another motion state - during an understeer-avoiding intervention. This is in clearly in the interest of safety, as it may help the driver maintain the vehicle on the road and avoid collisions with nearby vehicles.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

The motion-actuator control method according to the first aspect of the invention evaluates one force-based and one motion-based criterion and requires both criteria to be fulfilled if the first limitation on the motion actuators is to be enforced during the period. With reference to the above-cited objectives of the present disclosure, the need for interventions is thereby confirmed with high certainty. This serves to avoid unneeded interventions, especially understeer-avoiding interventions, so that the motion requests can be respected to a greater extent.

In some embodiments, the motion actuators are controlled subject to a configured second limitation during the period if the predicted motion request exceeds said force and moment capabilities *or* the predicted motion state exceeds the motion-state threshold. (It is noted that the case where the predicted motion request exceeds said force and moment capabilities *and* the predicted motion state exceeds the motion-state threshold has already been addressed; in this case the motion actuators are controlled subject to the configured first limitation.) This leads to a less intrusive understeer-avoiding action being taken as long as the need for interventions has not been confirmed with the desired high certainty, i.e., by the fulfilment of both the force-based criterion and the motion-based criterion. Preferably, the second configured limitation is less restrictive than the first configured limitation.

In some embodiments, the motion-state threshold is a yaw-rate threshold. The yaw-rate threshold may be a function of the vehicle's longitudinal speed. In particular, the yaw-rate threshold may be inversely proportional to the longitudinal speed. All of these options represent useful motion-based criteria for determining whether an understeer-avoiding intervention is needed.

In some embodiments, the momentary force and moment capabilities include momentary lateral-force capabilities, and the configured first limitation is a longitudinal-acceleration limitation. By limiting only the longitudinal acceleration, the driver or ADS can more easily maintain the ego vehicle on the road and avoid collisions with nearby vehicles.

In a second aspect of the invention, there is provided a controller configured for real-time control of motion actuators in a heavy commercial vehicle in accordance with motion requests. The controller comprises a motion-request interface configured to obtain a stream of motion requests, processing circuitry configured to perform the method of the first aspect, and a control interface configured to feed control signals to the motion actuators.

Because the controller applies the teachings of the first aspect of the invention, it substantially shares its advantages and other technical effects. It can be embodied with an equivalent degree of technical variation.

The invention further relates to a computer program containing instructions for causing a computer, or the controller in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

**BRIEF DESCRIPTION OF THE DRAWINGS**

Aspects and embodiments are now described, by way of example, with reference to the accompanying drawings, on which:

figure 1A shows a heavy commercial vehicle composed of two vehicle units, in which a controller according to an embodiment of the invention is arranged for controlling motion actuators in the vehicle;

figure 1B is a detailed view of the controller;

figure 2 is a flowchart of a method according to an embodiment of the invention; and

figure 3 illustrates the prediction of motion requests to be obtained after a period of predefined length T into the future, as practiced in embodiments of the present invention.

**DETAILED DESCRIPTION**

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

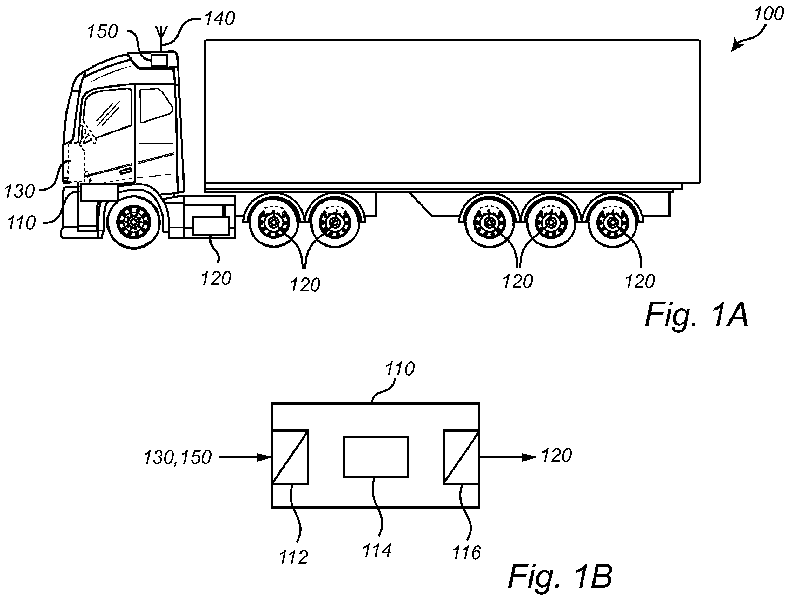

Figure 1A shows a heavy commercial vehicle composed of a front vehicle unit (tractor) and a rear vehicle unit (trailer).

The vehicle is equipped with motion actuators 120 including at least one propulsion actuator, at least one brake and at least one steering actuator.

The propulsion actuator may be an internal combustion engine arranged to apply, via transmission arrangements, a drive torque to one or more axles. Another option is to use one or more battery-powered electric motors acting on individual wheels or axles. The electric motors are arranged in the tractor and optionally in the trailer as well. A further option, still within the field of applicability of the present invention, is where the vehicle is propelled by electric motors powered by an energy conversion plant in the vehicle, such as a fuel cell designed to convert liquid or gaseous fuel into electric energy.

The brakes may be frictional (e.g., disc brakes, drum brakes), electromagnetic (e.g., eddy-current brakes) or regenerative (e.g., electric motors temporarily operated as generators during braking episodes). The brakes may further include an engine retarder if the vehicle is propelled by an internal combustion engine. The brakes may be controllable with respect to the amount of braking force to be exerted on each braked axle or each braked wheel. The vehicle may be configured for a braking force of at least 3 kN/ton, such as at least 4 kN/ton, such as at least 5 kN/ton. The teachings disclosed herein may be applied to the control of combinations of a parking brake and service brakes.

The motion actuators 120 may further include steering arrangements, such as electrically or hydraulically powered mechanical linkages, for adjusting steering angles of the steered wheels. At least the wheels on the front axle of the tractor are steered. The invention is also applicable to vehicles where wheels on further axles are steered, in the tractor or the trailer or both. Articulated steering and differential-speed steering are two further options within the scope of the present invention.

In quantitative terms, the heavy commercial vehicle is equipped with propulsion actuators for a total propulsion power per unit vehicle mass of 20 kW/ton or less, 10 kW/ton or less, or 5 kW/ton or less. The figures on vehicle mass refer to the fully laden condition and all vehicle units of a combination vehicle; it may be of the order of tens of ton, such as ≥10 ton, ≥20 ton, ≥30 ton or ≥40 ton. Electric actuators in the dual use as propulsion actuators and braking actuators may have a propulsion power approximately equal to the regenerative braking power. The techniques disclosed herein are suitable at least for vehicles with these characteristics. They are also suitable for even lower power-to-mass ratios, e.g., down to 2.2 kW/ton, which is the regulatory minimum motorization in some jurisdictions.

The vehicle shown in figure 1A is further equipped with sensorics for monitoring in real time the vehicle's force and moment capabilities and at least one motion state. It is understood that the control of the motion actuators 120 according to the teachings in this disclosure may include feedback arrangements, by which the control signals to the motion actuators 120 are determined in response to the vehicle's current force and moment capabilities and its motion state. The sensorics may include linear or angular encoders arranged at moving parts (e.g., wheel angle sensor, wheel-speed sensor), strain gauges arranged on structural parts, inertial measurement units, global navigation satellite system (GNSS) receivers and the like. The sensorics may further include various instruments for estimating a loading state of the vehicle, a road-wheel friction coefficient, a tire health condition, a wind velocity distribution, a surface temperature of the road, as well as similar quantities relevant for judging the vehicle's force and moment capabilities at runtime.

The vehicle illustrated in figure 1A further includes a driver interface 130, which may include a conventional steering wheel and conventional accelerator and brake pedals. The driver interface 130 may be configured to allow manual or autonomous operation of the vehicle at SAE levels Lo, L1 or L2. The vehicle further includes a communication interface 150 with a wireless transceiver 140 configured to establish and maintain a data link while the vehicle is operating, e.g., a cellular data link towards the global Internet. The communication interface 150 can also be used to connect the vehicle to a remote operator interface, a level-$L_4$ automated driving system (ADS) or the like.

A distinctive feature of the vehicle is the controller 110 to be described next, which is responsible for real-time control of the motion actuators 120 reviewed above. As the detailed view in figure 1B shows, the controller 110 includes a motion-request interface 112 for obtaining a stream of motion requests from the driver interface 130 or an ADS, a set of processing circuitry 114, as well as a control interface 116 configured to feed control signals to the motion actuators 120. The controller 110 may act as a vehicle motion management (VMM) system in the vehicle, or be included in such a VMM system. The controller may be implemented in a vehicle-unit computer (VUC).

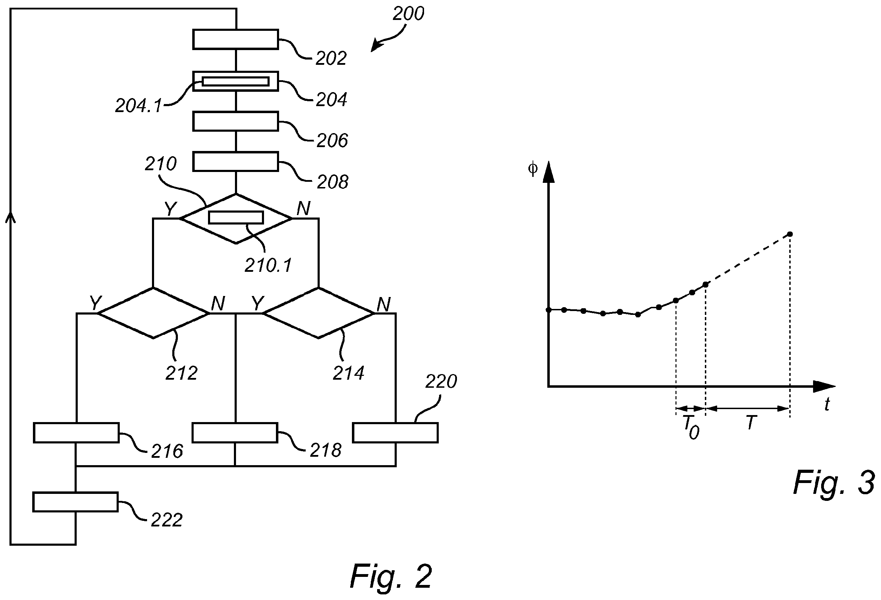

The behavior of the controller 110 will be described in terms of the method 200 depicted in flowchart form in figure 2. It is noted that one or more steps of the method 200 may be optional and thus not form part of all embodiments. Further, embodiments of the method 200 can be implemented in other devices than the controller 110 for the purpose of controlling the motion actuators 120 in the vehicle in real time. For example, the method 200 can be executed by a general-purpose computer equipped with communication interfaces suitable for receiving said motion requests and providing said control signals to the motion actuators 120 in the vehicle.

In a first step 202 of the method 200, a stream of motion requests is obtained. As mentioned, the stream of motion requests can be understood as a time-dependent representation of motion requests entered via the driver interface 130 or received from an ADS through the intermediary of the communication interface 150. A motion request can be derived from a steering-wheel position (angle) or a pedal position (amount of depression), or a position of a different input means. In an example, a motion request of the form

$$v_{req} = \begin{bmatrix} F_x \\ F_y \\ M_z \end{bmatrix}$$

can be derived from a brake/accelerator pedal position $a_{x,req}$ and a steering-wheel position $\delta_{req}$ using the following relationship:

$$v_{req} = \begin{bmatrix} ma_{x,req} \\ 2C_\alpha \delta_{req} \\ 2C_\alpha L_f \delta_{req} \end{bmatrix},$$

where m denotes a mass of the vehicle, $C_\alpha$ is a cornering stiffness of the wheels and $L_f$ is a track width of the steered axle. Alternatively, the lateral force can be derived as the quotient of the longitudinal speed and radius of curvature that result from the motion requests.

As mentioned above, it is assumed that the stream of motion requests contains a valid motion request for each point in time during operation of the vehicle, or it contains basis for inferring a motion request for each point in time. The inference may evaluate a history of one or more latest explicit motion requests in view of a rule that the latest explicit motion request shall apply until further notice, or a rule that the latest explicit motion request shall apply for a predefined period after which the vehicle shall be maintained in uniform motion or that any active propulsion shall be terminated after the predefined period. The stream of motion requests can be obtained through the motion-request interface 112 of the controller 110.

In a second step 204 of the method 200, a motion request to be obtained after a period of predefined length $T$ into the future is predicted. The length $T$ of the period may in some embodiments be between $_{0.5}$ and $_{2.5}$ seconds, preferably between 1.0 and 2.0 seconds, preferably around 1.0 second. The prediction may be performed on the input-means positions (e.g., brake/accelerator pedal position $a_{x,req}$, steering-wheel position $\delta_{req}$) or on the motion request $v_{req}$ derived from these. The prediction may be performed by inputting a history of one or more latest explicit motion requests to a filter, such as a suitably configured and tuned Savitzky-Golay filter or finite impulse response (FIR) filter.

Alternatively, the prediction may be an algorithm that applies an assumption about driver behavior or ADS behavior. For example, it may be assumed that the steering-wheel rate is constant and/or pedal-position rate is constant throughout the period of length T. An example of such prediction is illustrated in figure 3, which shows a generic input-means position $\phi$ as a function of time t. The growth rate of the input-means position $\phi$ is estimated over a history of length $T_0$, and by assuming that an equal growth rate applies for the next T units of time, the value of the input-means position at the end of the period can be predicted. The growth rate can be estimated as a difference quotient,

$$\frac{\Delta\phi}{\Delta t} = \frac{\phi(t_0 + T_0) - \phi(t_0)}{T_0},$$

where $t_0$ is the left endpoint of the history, so that the motion request to be obtained after the length-T period is predicted as:

$$\phi(t_0 + T_0 + T) \approx \phi(t_0 + T_0) + \frac{\Delta\phi}{\Delta t}T.$$

In a variation to the approach shown in figure 3, a second- or higher-order polynomial can be fitted to the time evolution of the input-means position $\phi$ in the interval $T_0$, which polynomial is then evaluated after T units of time.

In an optional additional substep, it may be verified that the predicted value of the input-means position is within a defined range $[\underline{\phi}, \bar{\phi}]$ of the input means. If the predicted value is outside the defined range, it may be truncated to (i.e., replaced with) the closest one of the boundaries of the defined range.

Further alternatively, the prediction algorithm used in step 204 may rely on an assumption that the steering-wheel position shall be constant and/or the pedal position shall be constant in the period of length T.

In a third step 206, it is determined whether the predicted motion request is within the vehicle's momentary force and moment capabilities. Step 206 can be understood as the evaluation of a force-based criterion. The momentary force and moment capabilities can be expressed as bounds $\underline{v}, \bar{v}$ on the motion requests, whereby step 206 can be implemented as an evaluation of an element-wise single or double inequality such as $v_{req} \le \bar{v}$, $\underline{v} \le v_{req}$ or $\underline{v} \le v_{req} \le \bar{v}$ can be evaluated.

The bounds $\underline{v}, \bar{v}$ can be repeatedly verified (or updated, refreshed), in an optional step 222, namely, on the basis of the vehicle state, sensor data and/or environmental conditions. As mentioned above, such vehicle state, sensor data and environmental conditions may include meteorological conditions, cleanliness of the roadway, tire conditions, vehicle loading conditions, the road-wheel friction coefficient and the like. For example, the maximum achievable lateral force can be estimated from the road-wheel friction coefficient $\mu$ as

$$F_{y,lim} = SF \times \mu \sum_i F_{z,i},$$

where $F_{z,i}$ is the load on the ith axle, and $SF \le 1$ is a user-configured safety factor. The safety factor SF may be chosen in the range [0.8, 0.9]. Alternatively or additionally, the maximum achievable lateral force may be computed on the basis of a rollover criterion, e.g., on the basis of the track width and a height of the vehicle's center of gravity. A maximum achievable lateral force computed in the aim of avoiding rollover of a fully laden truck or truck combination may correspond to a maximum lateral acceleration in the range of *0.30g* to *0.35g*. It is noted that this maximum value is significantly lower than for passenger cars, where a lateral acceleration limit may need to be supplemented by further criteria if a complete and reliable protection from undesired dynamic behaviors is to be achieved. The rollover criterion may be applied to each unit of a combination vehicle or to the combination vehicle as a whole.

Specifically, in a vehicle which is equipped with a liftable axle or which forms part of a vehicle combination where a vehicle unit has a liftable axis, the verification of the bounds $\underline{v}, \overline{v}$ may consider a status (e.g., lifted, active) of the liftable axle. This status may for instance affect the rollover sensitivity, jack-knifing sensitivity, adhesive weight, or the maximum achievable lateral force of the vehicle.

In a fourth step 208, the value which a motion state of the vehicle will have after said length-T period is predicted. The motion state may refer to a linear or angular motion of the vehicle, or any derivative of this motion with respect to time. The prediction of the motion state may be based on a kinematic model of the vehicle. The kinematic model may be of the form

$$\begin{cases} \dot{x} = Ax + Bu \\ y = Cx + Du \end{cases}$$

where the matrices *A, B, C, D* can constant or time-variable. Here, the lateral velocity $v_y$ and yaw rate $\omega_z$ may be taken as state variables,

$$x = \begin{bmatrix} v_y \\ \omega_z \end{bmatrix},$$

the yaw rate $\omega_z$ and lateral acceleration $a_y$ may be taken as observables,

$$y = \begin{bmatrix} \omega_z \\ a_y \end{bmatrix},$$

and the front-axle steering angle $\delta_f$ and the product $F_{fxw}\delta_f$, where $F_{fxw}$ is a longitudinal force acting on the front-axle wheels, are control variables,

$$u = \begin{bmatrix} \delta_f \\ F_{fxw}\delta_f \end{bmatrix}.$$

The kinematic model may be evolved by steps of 10 ms for T units of time, after which the predicted motion state is read from the state variables or the observables, or the predicted motion state is derived from these. As an example, with the above definitions of the state variables, observables and control variables, the following time-variant single-track model for a single-unit vehicle may be used to predict the motion state:

$$A = -\begin{bmatrix} m & 0 \\ 0 & J_z \end{bmatrix}^{-1} \begin{bmatrix} \dfrac{C_f + C_r}{|v_x(t)|} & \dfrac{C_f l_f - C_r l_r}{|v_x(t)|} + m v_x(t) \\ \dfrac{C_f l_f - C_r l_r}{|v_x(t)|} & \dfrac{C_f l_f^2 + C_r l_r^2}{|v_x(t)|} \end{bmatrix}$$

$$B = \begin{bmatrix} m & 0 \\ 0 & J_z \end{bmatrix}^{-1} \begin{bmatrix} C_f & 1 \\ C_f l_f & l_f \end{bmatrix}$$

$$C = \begin{bmatrix} 0 & 0 \\ 1 & 0 \end{bmatrix} A + \begin{bmatrix} 0 & 1 \\ 0 & v_x(t) \end{bmatrix}$$

$$D = \begin{bmatrix} 0 & 0 \\ 1 & 0 \end{bmatrix} B$$

where $m, J_z$ denote the vehicle's mass and yaw moment of inertia, $C_f, C_r$ are the cornering stiffness values of the front and rear wheels, $l_f, l_r$ are the front and rear track widths, and $v_x(t)$ is the longitudinal velocity of the vehicle. This model is useful for predicting the yaw rate $\omega_z$.

In a fifth step 210 of the method 200, it is determined whether the predicted motion state is within a motion-state threshold. As mentioned, the motion-state threshold may in some embodiments be a yaw-rate threshold:

$$|\omega_z| \leq \omega_{z,lim}.$$

The yaw-rate threshold may be a function of the vehicle's longitudinal speed:

$$\omega_{z,lim} = \omega_{z,lim}\big(v_x(t)\big).$$

In particular, the yaw-rate threshold may be inversely proportional to the longitudinal speed: $\omega_{z,lim} = C/v_x(t)$. The numerator C can be a constant determined empirically in trials. Alternatively, one may use a bound on the lateral acceleration, e.g., $a_{y,lim} = F_{y,lim}/m$, so that

$$\omega_{z,lim} = \frac{a_{y,lim}}{v_x(t)}.$$

By way of validation, it is noted that a movement at constant angular velocity $\omega$ corresponds to a linear velocity of $v = \omega \times r$ and an acceleration of $\alpha = \omega \times v$, where the lateral component of the acceleration is $a_y = \omega_z v_x$ if the vertical speed is $v_z = 0$. This is equivalent to $\omega_z = a_y/v_x$. In other embodiments, the motion-state threshold may be a lateral-speed threshold:

$$\big|v_y(t)\big| \leq v_{y,lim}.$$

For each of these options, step 210 can be understood as the evaluation of a motion-based criterion.

In some embodiments, the execution of the method 200 may proceed from step 210 either to a step 216 of controlling the motion actuators without limitation during the length-T period or to a step 220 of controlling the motion actuators subject to a configured first limitation during said period. Step 220 is chosen if the predicted motion request exceeds said force and moment capabilities (as determined in step 206) *and* the predicted motion state exceeds the motion-state threshold (as determined in step 210); step 216 is chosen for all other outcomes of steps 206 and 210. After this, as suggested by the upward loop segment in figure 2, the execution flow may resume from step 202 after optionally verifying 222 the vehicle's momentary force and moment capabilities.

In other embodiments, like the one illustrated in figure 2, the execution of the method 200 may proceed from step 210 to one of three possible steps 216, 218 and 220, wherein the added step 218 relates to controlling the motion actuators subject to a configured second limitation during said length-T period. The second limitation may be configured in a less restrictive way than the first limitation. Step 218 is chosen if the predicted motion request exceeds said force and moment capabilities (as determined in step 206) *or* the predicted motion state exceeds the motion-state threshold (as determined in step 210). This is reflected by the layered structure of the decision points 210, 212, 214 in figure 2. The decisions points 212 and 214 both refer to whether the predicted motion request is within the vehicle's momentary force and moment capabilities, as determined in step 206.

The act of controlling 216 the motion actuators without limitation may include respecting the motion requests fully. For the avoidance of doubt, the motion requests to be respected are the actual ones, not the predicted motion requests which were evaluated in step 206. The motion requests may be carried out by the controller 110, e.g. by executing an optimization-based control allocation algorithm, to the extent the motion requests do not exceed the capabilities of the motion actuators 120 in the vehicle. In particular, the motion requests may be carried out in step 216 unless they require values of the control signals that would exceed the defined control signal ranges of the motion actuators 120. In step 216, neither the first limitation nor the second limitation, if it has been configured, is enforced.

The configured first limitation, which is applied in step 220, may include a condition for the longitudinal acceleration to be below a negative constant $a_{x,max}^{(1)} < 0$, that is, $a_x \leq a_{x,max}^{(1)}$. This corresponds to forced braking, unless the driver or ADS is braking voluntarily during the length-T period. Effectively, in a driver-operated vehicle, the accelerator pedal will be inactivated for the duration of said period. An additional lower bound $a_{x,max}^{(10)}$ may be enforced to ensure gentle deceleration of the vehicle, as per

$$a_{x,max}^{(10)} \leq a_x \leq a_{x,max}^{(1)}.$$

In one embodiment, this longitudinal acceleration limitation is combined with a force-based criterion (i.e., force and moment capabilities) formulated in terms of lateral force.

The configured second limitation may include a condition for the longitudinal acceleration to be below a non-negative constant $a_{x,max}^{(2)} \geq 0$, that is, $a_x \leq a_{x,max}^{(2)}$. This corresponds to a limitation on forward longitudinal acceleration, so that the risk of understeer is maintained in bounds during the length-T period. The second limitation, just like the first limitation, may be configured by an implementer in a manner suitable for a particular vehicle or vehicle type and possibly in view of a specific use case.

In a further development of the method 200, the step 210 of determining whether the predicted motion request is within the vehicle's momentary force and moment capabilities includes determining 210.1 a global force request for satisfying the predicted motion request. The global force request is determined on the basis of a current state of the vehicle, such the vehicle's speed, tire status, wind conditions and/or a road elevation profile (grade). The global force request may be determined using, as a baseline, those forces which are required to maintain the vehicle in uniform motion. This may include lateral and longitudinal forces opposing air resistance and rolling resistance, as well as variations in vertical force that result from the elevation profile of the vehicle's path.

In another further development, the method 200 further comprises predicting 204.1 a plurality of motion requests to be obtained during the length-T period. The predicted motion requests may correspond to equidistant points in time in the length-T period. The predicted motion requests may be distributed over the full length of the period or in a subinterval thereof, preferably located towards the end of the period. The availability of such a time series of predicted motion requests, especially at the end of the length-T period, makes it possible to estimate trends or time derivatives of the motion requests, so that the force-based criterion can be formulated more freely. The availability of a time series of predicted motion requests could also make it possible to evaluate the force-based criterion at multiple points in time within the length-T period, so that the risk of understeer can be controlled throughout said period.

An architecture of the processing circuitry 112 in a controller (VMM system) 110 that is suitable for implementing various embodiments the above-described method 200 will be briefly outlined. Here, the processing circuitry 112 may comprise the following functional sections:

- Motion Estimation,

- Motion Prediction, and

- Motion Coordination.

The task of estimating the longitudinal speed $v_x$, the axle loads $F_{z,i}$ and the road-wheel friction coefficient $\mu$ at runtime may be allocated to the Motion Estimation section, which feeds these estimates to the Motion Prediction section and to the Motion Coordination section. The Motion Prediction section predicts whether an understeer condition is likely to occur in the length-T interval. The Motion Coordination section receives a predicted motion request $v_{req}$ from the Motion Prediction section and performs a control allocation the motion actuators 120, in view of their status and capabilities. The Motion Coordination section may share the status and capabilities with the Motion Prediction section, which uses them as basis for the prediction of the understeer condition.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. For example, in additional to multi-unit combination vehicles of the type illustrated in figure 1, the invention is equally applicable to single-unit vehicles.

**Claims**

1. A method (200) for real-time control of motion actuators in a heavy commercial vehicle (100) in accordance with motion requests, the method comprising:

   obtaining (202) a stream of motion requests;
   predicting (204) a motion request to be obtained after a period of predefined length (T) into the future;
   determining (206) whether the predicted motion request is within the vehicle's momentary force and moment capabilities;
   predicting (208) a motion state of the vehicle after said period;
   determining (210) whether the predicted motion state is within a motion-state threshold;
   if the predicted motion request is within said force and moment capabilities and the predicted motion state is within the motion-state threshold:

   - controlling (216) the motion actuators without limitation during said period; if the predicted motion request exceeds said force and moment capabilities and the predicted motion state exceeds the motion-state threshold:

   - controlling (220) the motion actuators subject to a configured first limitation during said period, the method being **characterised in that** the motion request to be obtained after said period into the future is predicted based on an assumption of driver behavior or automated driving system, ADS, behavior and/or is predicted by inputting a history of one or more latest explicit motion requests to a filter.

2. The method of claim 1, wherein the first configured limitation includes a condition for longitudinal acceleration to be below a negative constant $a^{(1)}_{x,max} < 0$.

3. The method of claim 1 or 2, further comprising, if the predicted motion request exceeds said force and moment capabilities or the predicted motion state exceeds the motion-state threshold,

   - controlling (218) the motion actuators subject to a configured second limitation during said period.

4. The method of claim 3, wherein the second configured limitation is less restrictive than the first configured limitation.

5. The method of claim 3 or 4, wherein the second configured limitation includes a condition for longitudinal acceleration to be below a non-negative constant $a^{(2)}_{x,max} \geq 0$.

6. The method of any of the preceding claims, wherein:

   the vehicle's momentary force and moment capabilities include momentary lateral force capabilities; and
   the configured first limitation is a longitudinal acceleration limitation.

7. The method of any of the preceding claims, wherein determining (210) whether the predicted motion request is within the vehicle's momentary force and moment capabilities includes determining (210.1) a global force request for satisfying the predicted motion request.

8. The method of any of the preceding claims, wherein the length (T) of the period is between 0.5 and 2.5 seconds, preferably between 1.0 and 2.0 seconds.

9. The method of any of the preceding claims, wherein the motion request to be obtained after said period into the future is predicted based on an assumption of driver behavior or ADS behavior that includes constant steering-wheel rate and/or constant pedal-position rate.

10. The method of any of the preceding claims, wherein the motion request to be obtained after said period into the future is predicted by inputting the history of one or more latest explicit motion requests to a Savitzky-Golay filter and/or a finite impulse response, FIR, filter.

11. The method of any of the preceding claims, further comprising:
repeatedly verifying (222) the vehicle's momentary force and moment capabilities on the basis of the vehicle state, sensor data and/or environmental conditions.

12. The method of claim 11, wherein the vehicle's momentary force and moment capabilities are verified at least on the basis of lift axle status.

13. The method of any of claims 1 to 12, wherein:
the stream of motion requests is obtained from an automated driving system, ADS (150).

14. A controller (110) configured for real-time control of motion actuators (120) in a heavy commercial vehicle (100) in accordance with motion requests, the controller comprising:

a motion-request interface (112) configured to obtain a stream of motion requests;
processing circuitry (114) configured to perform the method of any of the preceding claims; and
a control interface (116) configured to feed control signals to the motion actuators.

15. A computer program comprising instructions to cause the controller (110) of claim 20 to perform the method (200) of any of claims 1 to 13.

**Patentansprüche**

1. Verfahren (200) zur Echtzeit-Steuerung von Bewegungsaktuatoren in einem schweren Nutzfahrzeug (100) gemäß Bewegungsanforderungen, wobei das Verfahren Folgendes umfasst:

Erhalten (202) eines Stroms von Bewegungsanforderungen;
Vorhersagen (204) einer Bewegungsanforderung, die nach einem Zeitraum von vordefinierter Länge (T) in der Zukunft erhalten werden soll;
Bestimmen (206), ob die vorhergesagte Bewegungsanforderung innerhalb der momentanen Kraft- und Drehmomentkapazitäten des Fahrzeugs liegt;
Vorhersagen (208) eines Bewegungszustands des Fahrzeugs nach dem Zeitraum;
Bestimmen (210), ob der vorhergesagte Bewegungszustand innerhalb eines Bewegungszustands-Schwellenwerts liegt;
wenn die vorhergesagte Bewegungsanforderung innerhalb der Kraft- und Drehmomentkapazitäten liegt und der vorhergesagte Bewegungszustand innerhalb des Bewegungszustands-Schwellenwerts liegt:

- Steuern (216) der Bewegungsaktuatoren ohne Begrenzung während des Zeitraums; wenn die vorhergesagte Bewegungsanforderung die Kraft- und Drehmomentkapazitäten überschreitet und der vorhergesagte Bewegungszustand den Bewegungszustands-Schwellenwert überschreitet:

- Steuern (220) der Bewegungsaktuatoren, die einer konfigurierten ersten Begrenzung unterliegen, während des Zeitraums,

wobei das Verfahren **dadurch gekennzeichnet ist, dass** die Bewegungsanforderung, die nach dem Zeitraum in der Zukunft erhalten werden soll, basierend auf einer Annahme zum Fahrerverhalten oder zum Verhalten des automatisierten Fahrsystems, ADS, vorhergesagt wird und/oder durch Eingabe eines Verlaufs einer oder mehrerer letzter expliziter Bewegungsanforderungen in ein Filter vorhergesagt wird.

2. Verfahren nach Anspruch 1, wobei die erste konfigurierte Begrenzung eine Bedingung enthält, dass die Längsbeschleunigung unter einer negativen Konstante $a^{(1)}_{x,max} < 0$ liegen muss.

3. Verfahren nach Anspruch 1 oder 2, ferner umfassend, wenn die vorhergesagte Bewegungsanforderung die Kraft- und Drehmomentkapazitäten überschreitet oder der vorhergesagte Bewegungszustand den Bewegungszustands-Schwellenwert überschreitet,

- das Steuern (218) der Bewegungsaktuatoren, die einer konfigurierten zweiten Begrenzung unterliegen, während des Zeitraums.

4. Verfahren nach Anspruch 3, wobei die zweite konfigurierte Begrenzung weniger restriktiv ist als die erste konfigurierte Begrenzung.

5. Verfahren nach Anspruch 3 oder 4, wobei die zweite konfigurierte Begrenzung eine Bedingung enthält, dass die Längsbeschleunigung unter einer nicht negativen Konstante $a_{x,max}^{(2)} \geq 0$ liegen muss.

6. Verfahren nach einem der vorhergehenden Ansprüche, wobei:

   die momentanen Kraft- und Drehmomentkapazitäten des Fahrzeugs momentane Lateralkraftkapazitäten enthalten; und
   die konfigurierte erste Begrenzung eine Längsbeschleunigungsbegrenzung ist.

7. Verfahren nach einem der vorhergehenden Ansprüche, wobei das Bestimmen (210), ob die vorhergesagte Bewegungsanforderung innerhalb der momentanen Kraft- und Drehmomentkapazitäten des Fahrzeugs liegt, das Bestimmen (210.1) einer globalen Kraftanforderung zum Erfüllen der vorhergesagten Bewegungsanforderung enthält.

8. Verfahren nach einem der vorhergehenden Ansprüche, wobei die Länge (T) des Zeitraums zwischen 0,5 und 2,5 Sekunden, vorzugsweise zwischen 1,0 und 2,0 Sekunden, beträgt.

9. Verfahren nach einem der vorhergehenden Ansprüche, wobei die Bewegungsanforderung, die nach dem Zeitraum in der Zukunft erhalten werden soll, basierend auf einer Annahme zum Fahrerverhalten oder zum ADS-Verhalten vorhergesagt wird, das eine konstante Lenkradrate und/oder eine konstante Pedalpositionsrate enthält.

10. Verfahren nach einem der vorhergehenden Ansprüche, wobei die Bewegungsanforderung, die nach dem Zeitraum in der Zukunft erhalten werden soll, durch Eingabe des Verlaufs einer oder mehrerer letzter expliziter Bewegungsanforderungen in ein Savitzky-Golay-Filter und/oder ein Filter mit begrenztem Impulsansprechen, FIR-Filter, vorhergesagt wird.

11. Verfahren nach einem der vorhergehenden Ansprüche, das ferner Folgendes umfasst:
   wiederholtes Überprüfen (222) der momentanen Kraft- und Drehmomentkapazitäten des Fahrzeugs basierend auf dem Fahrzeugzustand, Sensordaten und/oder Umgebungsbedingungen.

12. Verfahren nach Anspruch 11, wobei die momentanen Kraft- und Drehmomentkapazitäten des Fahrzeugs mindestens auf Basis des Zustands der Hubachse überprüft werden.

13. Verfahren nach einem der Ansprüche 1 bis 12, wobei:
   der Strom von Bewegungsanforderungen von einem automatisierten Fahrsystem, ADS, (150) erhalten wird.

14. Steuerung (110), die für die Echtzeit-Steuerung von Bewegungsaktuatoren (120) in einem schweren Nutzfahrzeug (100) gemäß Bewegungsanforderungen konfiguriert ist, wobei die Steuerung Folgendes umfasst:

   eine Bewegungsanforderungsschnittstelle (112), die dazu konfiguriert ist, einen Strom von Bewegungsanforderungen zu erhalten;
   einen Verarbeitungsschaltkreis (114), der dazu konfiguriert ist, das Verfahren nach einem der vorhergehenden Ansprüche durchzuführen; und
   eine Steuerschnittstelle (116), die dazu konfiguriert ist, den Bewegungsaktuatoren Steuersignale zuzuführen.

15. Computerprogramm, das Anweisungen umfasst, um die Steuerung (110) nach Anspruch 20 dazu zu veranlassen, das Verfahren (200) nach einem der Ansprüche 1 bis 13 durchzuführen.

**Revendications**

1. Procédé (200) de commande en temps réel d'actionneurs de mouvement dans un véhicule utilitaire lourd (100) conformément à des demandes de mouvement, le procédé comprenant les mouvements étapes consistant à ;

    obtenir (202) un flux de demandes de mouvement ;
    prévoir (204) est une demande de mouvement à obtenir après une période de longueur prédéfinie (T) dans le futur ;
    déterminer (206) si la demande de mouvement prédite se situe dans les limites des capacités de force et de couple momentanés du véhicule ;
    prévoir (208) un état de mouvement du véhicule après ladite période ;
    déterminer (210) si l'état de mouvement prédit se situe dans un seuil d'état de mouvement ;
    si la demande de mouvement prévu est comprise dans les capacités de force et de couple et que l'état de mouvement prévu est compris dans le seuil d'état de mouvement ;

      - commander (216) les actionneurs de mouvement sans limitation pendant ladite période ; si la demande de mouvement prédite dépasse lesdites capacités de force et de couple et que l'état de mouvement prédit dépasse le seuil d'état de mouvement ;
      - commander (220) les actionneurs de mouvement soumis à une première limitation configurée pendant ladite période,

    le procédé étant **caractérisé en ce que** la demande de mouvement devant être obtenue après ladite période dans le futur est prédite sur la base d'une hypothèse de comportement du conducteur ou d'un système de conduite automatisé, d'ADS, de comportement et/ou est prédite en entrant un historique d'une ou plusieurs demandes de mouvement explicites les plus récentes dans un filtre.

2. Procédé selon la revendication 1, dans lequel la première limitation configurée comprend comme condition que l'accélération longitudinale soit inférieure à une constante négative $a_{x,max}^{(1)} < 0$.

3. Procédé selon la revendication 1 ou 2, comprenant en outre, si la demande de mouvement prédite dépasse lesdites capacités de force et de couple ou si l'état de mouvement prédit dépasse le seuil d'état de mouvement,
    - la commande (218) des actionneurs de mouvement soumis à une seconde limitation configurée pendant ladite période.

4. Procédé selon la revendication 3, dans lequel la seconde limitation configurée est moins restrictive que la première limitation configurée.

5. Procédé selon la revendication 3 ou 4, dans lequel la seconde limitation configurée comprend comme condition que l'accélération longitudinale soit inférieure à une constante non négative $a_{x,max}^{(2)} \geq 0$.

6. Procédé selon l'une quelconque des revendications précédentes, dans lequel ;

    les capacités de force et de couple momentanés du véhicule comprennent des capacités de force latérale momentanée ; et
    la première limitation configurée est une limitation d'accélération longitudinale.

7. Procédé selon l'une quelconque des revendications précédentes, dans lequel la détermination (210) si la demande de mouvement prédit est comprise dans les capacités de force et de couple momentanés du véhicule comprend la détermination (210.1) d'une demande de force globale pour satisfaire la demande de mouvement prédit.

8. Procédé selon l'une quelconque des revendications précédentes, dans lequel la longueur (T) de la période est comprise entre 0,5 et 2,5 secondes, de préférence entre 1,0 et 2,0 secondes.

9. Procédé selon l'une quelconque des revendications précédentes, dans lequel la demande de mouvement à obtenir après ladite période dans le futur est prédite sur la base d'une hypothèse de comportement du conducteur ou de comportement ADS qui comprend une vitesse constante du volant et/ou une vitesse constante de la position de la pédale.

10. Procédé selon l'une quelconque des revendications précédentes, dans lequel la demande de mouvement à obtenir après ladite période dans le futur est prédite en entrant l'historique d'une ou plusieurs demandes de mouvement explicites les plus récentes dans un filtre Savitzky-Golay et/ou un filtre à réponse impulsionnelle finie, FIR.

11. Procédé selon l'une quelconque des revendications précédentes, comprenant en outre :
la vérification répétée (222) des capacités de force et de couple momentanés du véhicule sur la base de l'état du véhicule, des données de capteur et/ou des conditions environnementales.

12. Procédé selon la revendication 11, dans lequel les capacités momentanées de force et de couple du véhicule sont vérifiées au moins sur la base de l'état de l'essieu relevable.

13. Procédé selon l'une quelconque des revendications 1 à 12, dans lequel :
le flux de demandes de mouvement est obtenu à partir d'un système de conduite automatisé, ADS (150).

14. Contrôleur (no) configuré pour commander en temps réel des actionneurs de mouvement (120) dans un véhicule utilitaire lourd (100) conformément à des demandes de mouvement, le contrôleur comprenant :

une interface de demande de mouvement (112) configurée pour obtenir un flux de demandes de mouvement ;
un circuit de traitement (114) configuré pour exécuter le procédé selon l'une quelconque des revendications précédentes ; et
une interface de commande (116) configurée pour fournir des signaux de commande aux actionneurs de mouvement.

15. Programme informatique comprenant des instructions pour amener le contrôleur (110) selon la revendication 20 à exécuter le procédé (200) selon l'une quelconque des revendications 1 à 13.

*Fig. 1A*

*Fig. 1B*

EP 4 551 440 B1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009088918 A1
- US 2010131142 A1

- FR 3100200 A1